(19)

Europäisches
Patentamt
European
Patent Office
Office européen
des brevets

(11) **EP 1 726 397 B1**

(12) **EUROPEAN PATENT SPECIFICATION**

(45) Date of publication and mention
of the grant of the patent:
**26.10.2011   Bulletin 2011/43**

(51) Int Cl.:
**B23K 26/20** (2006.01)

(21) Application number: **05719733.7**

(86) International application number:
**PCT/JP2005/003417**

(22) Date of filing: **23.02.2005**

(87) International publication number:
**WO 2005/082568 (09.09.2005 Gazette 2005/36)**

(54) **LASER WELDING METHOD**

LASERSCHWEISSVERFAHREN

PROCEDE DE SOUDAGE AU LASER

(84) Designated Contracting States:
**DE FR**

(30) Priority: **27.02.2004   JP 2004055336**

(43) Date of publication of application:
**29.11.2006   Bulletin 2006/48**

(73) Proprietors:
• **National Institute for Materials Science**
**Tsukuba-shi,**
**Ibaraki 305-0047 (JP)**
• **Ishikawajima-Harima Heavy Industries Co., Ltd.**
**Tokyo 100-8182 (JP)**

(72) Inventors:
• **TSUKAMOTO, S.,**
**c/o Nat. Inst. for Mat. Science**
**Tsukuba-shi,**
**Ibaraki 305-0047 (JP)**
• **KAWAGUCHI, I.,**
**c/o Nat. Inst. for Mat. Science**
**Tsukuba-shi,**
**Ibaraki 305-0047 (JP)**
• **ARAKANE, Goro,**
**c/o Nat. Inst. for Mat. Science**
**Tsukuba-shi,**
**Ibaraki 305-0047 (JP)**

• **HONDA, H.,**
**c/o National Inst. for Mat. Science**
**Tsukuba-shi,**
**Ibaraki 305-0047 (JP)**

(74) Representative: **Calamita, Roberto**
**Dehns**
**St Bride's House**
**10 Salisbury Square**
**London**
**EC4Y 8JD (GB)**

(56) References cited:
**WO-A1-02/060634      JP-A- 10 006 051**
**JP-A- 2002 321 073    JP-A- 2004 090 068**
**JP-A- 2004 090 068    US-A- 5 155 329**
**US-A- 5 651 903       US-A1- 2004 026 381**

• **ZIMMERMANN K ET AL: "ASPECTS OF QUALITY ASSURANCE WITH A PLASMA-MONITORING SYSTEM DURINGLASER BEAM WELDING" LASER IN DER TECHNIK: VORTRAEGE DES INTERNATIONALES KONGRESSESLASER. LASER IN ENGINEERING, XX, XX, 1 January 1994 (1994-01-01), pages 503-510, XP000607667**

## Description

The present invention relates to a laser welding method according to the preamble of claim 1 (see, for example, US 2004/0026 381 A1). More specifically, the present invention relates to a new laser welding method which can optimize a laser output variation condition more simply and securely in a laser welding method of suitably varying waveform and frequency of a laser output so as to prevent occurrence of weld defects such as porosity, blowhole and crack.

Background Art

In recent years, since enlargement of output in laser oscillators has significantly proceeded, this is expected to be applied to deep penetration welding and high-speed welding. In the deep penetration welding, however, as the welding becomes deeper, it is more difficult to stably maintain a keyhole formed by a laser emitted portion, and thus weld defects such as porosity, blowhole and crack easily occur accordingly. For this reason, in order to apply laser techniques to wide-range process of materials including structural materials, the techniques that securely prevent such weld defects become indispensable.

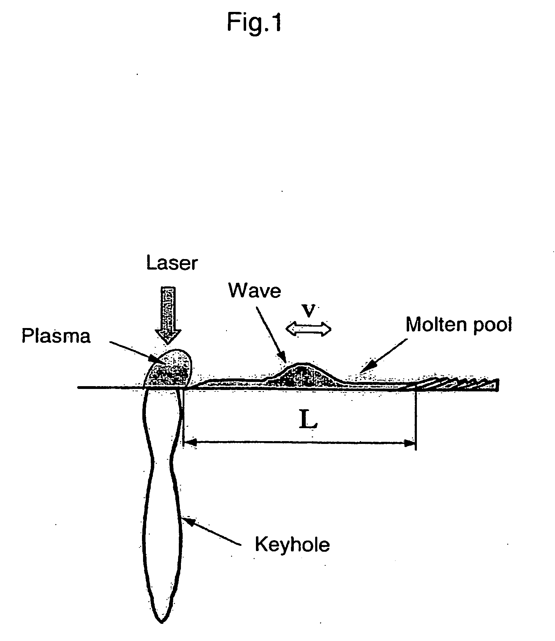

On the contrary, the inventors of the present invention propose a technique which periodically varies a laser output, and makes the frequency of the laser output match with a natural frequency of a wave generated on a surface of a molten pool, so as to prevent the weld defects effectively (for example, see Patent document 1). More specifically, in the welding which is already proposed by the inventors of this invention and periodically varies the laser output, when the laser output abruptly rises from a base output to a peak output, as shown in accompanying drawing Fig. 1, a lot of molten metal is blown from an inside of a keyhole, so that a wave is generated on the surface of the molten pool. After this wave propagates to the rear direction of the molten pool and is reflected from a rear end, the wave returns into the keyhole. A frequency of a reciprocating movement of the wave on the molten pool at this time, namely, the natural frequency of the wave f (Hz) is expressed by the following formula where a length of the molten pool at the rear side with respect to the keyhole is designated by L (mm) and a propagation speed of the wave is designated by v (mm/s):

$$f = v/2L \qquad (1).$$

As is clear from the formula (1), the natural frequency of the wave changes depending on the length L of the molten pool.

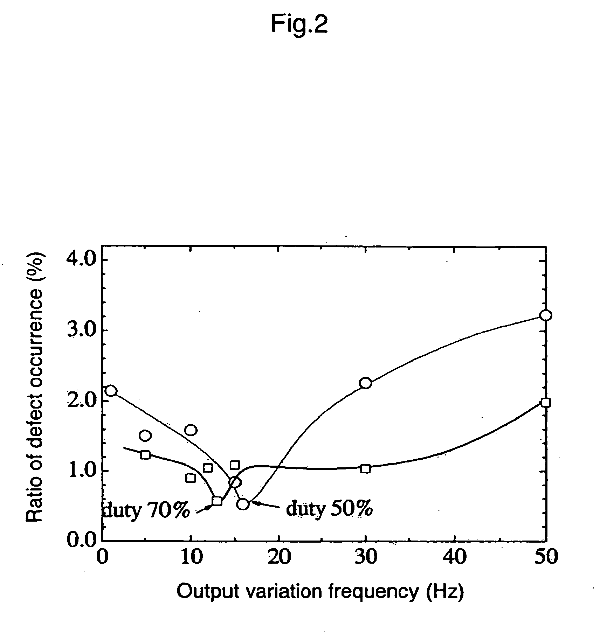

Further, Fig. 2 is a diagram illustrating one example of a relationship between a laser output variation frequency and a rate of defect occurrence at a time when the laser output is varied with a rectangular waveform such that the peak output is 20 kW and the base output is 12 kW and welding is carried out. The rate of the defect occurrence is defined as a percentage (%) of a porosity total cross section with respect to a molten cross section when X-ray radiography is carried out in a longitudinal section of the welded portion. When only a duty of the output variation is set to two different values, for example; 50% and 70%, the length L of the molten pool changes to 19.6 mm and 23.8 mm. Since the propagation speed of the wave is 630 mm/s in both the cases, when the natural frequency of the wave is calculated according to the formula (1), the natural frequency becomes 16.1 Hz (duty: 50%) and 13.2 Hz (duty: 70%). That is to say, in both the duties, when the laser output is varied at a frequency which matches with the natural frequency of the wave generated on the molten pool, the occurrence of porosity can be prevented most effectively.

Further, the inventors of this invention propose a technique which suitably controls a waveform of the variation in the laser output so as to further heighten the defect preventing effect (for example, see Patent document 2).

Patent document 1: Japanese Patent Application Laid-Open No. 2002-224867

Patent document 2: Japanese Patent Application Laid-Open No. 2002-273586

US 2004/0026381 A1 describes a laser welding method involving varying the frequency so as to conform with the natural oscillation frequency of the molten pool at a weld zone.

US-A-5155329 describes a method for monitoring laser beam welding which involves deducing welding beam input and depth of penetration by monitoring the intensity of light emission from the molten pool of a weld zone. JP 10/006051 descries comparing the frequency distribution of light emitted from the molten pool of two or more welds as a method of Judging the occurrence of weld defects.

Disclosure of Invention

As explained above, in the methods which are proposed by the inventors of the present invention, since the preventing effect of the weld defect greatly depends on a waveform and a frequency of the variation in the laser output, it is the most important process to simply optimize conditions of the variation in the laser output. Further, in order to determine an optimum waveform in this welding method, the inventors of the present invention, therefore, develop a method of measuring light emission strength of plasma generated from a laser emitted position and detecting a state in which the light emission strength of the plasma becomes a threshold value or less so as to simply and easily determine the optimum frequency and the optimum waveform, and seek a patent for this method (Japanese Patent Application No.

2002-257195). On the other hand, however, while mechanisms of the weld defects are studied more variously and specifically, a possibility that the laser output variation conditions can be determined more simply and securely remains. Particularly, there Is a room to study means for determining the optimum waveform.

It is, therefore, an object of the present invention to provide a new laser welding method, which is proposed by the inventors, of measuring light emission strength of a plasma signal, analyzing a variation frequency of the signal so as to be capable of optimizing a laser output variation condition more simply and securely.

In a first aspect, the present invention provides a laser welding method of varying a waveform and a frequency of a laser output in a controlled manner so as to prevent occurrence of weld defects, which comprises detecting a time change in light emission strength of plasma or plume generated from a laser welded portion characterised by analyzing the frequency characteristics of the light emission to obtain an amplitude of a frequency component which is the same or near a variation frequency of the laser output, and setting a laser output variation condition so that the amplitude of the frequency component becomes maximum.

A second aspect of the present invention provides a laser welding method according to the first aspect which comprises detecting the time change in the light emission strength of the plasma or plume generated from the laser welded portion, setting an arbitrary threshold value to the time change in the light emission strength of the plasma or plume, and setting the laser output variation condition so that a sum of time at which the light emission strength becomes the threshold value or less becomes minimum.

Further, a third aspect of the present invention provides a laser welding method according to the second aspect, which comprises setting the laser output variation condition so that the sum of the time at which the light emission strength becomes the threshold value or less for longer time than a predetermined time becomes minimum.

According to the present invention, the light emission strength of the plasma or plume generated from the laser emitted position is measured so that the laser output variation condition is optimized, but in this invention, an attention is paid particularly to a relationship between the laser output variation frequency and the light emission strength. The laser output variation frequency and the light emission strength are suitably analyzed and processed, so that the optimum laser output variation frequency can be found more simply and quickly.

Brief Description of Drawings

Fig. 1 is a pattern diagram illustrating a behavior of a molten pool near a material surface at the time of laser welding;

Fig. 2 is a diagram illustrating a relationship between an output variation frequency and a rate of defect occurrence in weld where an output is varied at duty of 50% and 70%;

Fig. 3 is a diagram illustrating a constitution for detecting a light emission signal of plasma or plume according to the present invention;

Fig. 4 is a diagram illustrating a time change of plasma emission strength measured under an optimum output variation condition;

Fig. 5 is a diagram illustrating results of analyzing the frequency of the plasma light emission signal measured under the optimum output variation condition, an axis of abscissas represents the frequency of the plasma emission signal, and an axis of ordinate represents an amplitude in a frequency component;

Fig. 6 is a diagram illustrating the plasma emission strength measured at the time of the laser welding;

Fig. 7 is a diagram illustrating a variation waveform of the laser output in an embodiment of the present invention;

Fig. 8 is a diagram illustrating a relationship between a ratio of defect occurrence on the welded portion where the output is varied as shown in Fig. 7 and an output variation frequency;

Fig. 9 is a diagram illustrating a time change in the plasma emission strength measured under the respective output variation frequencies in the embodiment of the present invention;

Fig. 10 is a diagram illustrating a level of the amplitude in the frequency component which matches with the output variation frequencies under conditions of the output variation frequencies according to the results of analyzing the frequency of the plasma emission signal in the embodiment of the present invention; and

Fig. 11 is a diagram illustrating a percentage ($t_0/t$) of a sum of time at which the state that the plasma emission strength is 0.02 V or less continues for 2 ms or more with respect to the measuring time in the embodiment of the present invention.

Reference numerals in the drawings designate the followings.

1: plasma or plume
2: photodiode
3: recording device
4: laser
5: parabolic mirror
6: object to be welded
7: work table

Best Mode for Carrying Out the Invention

The present invention has the above characteristics, but an embodiment is explained below. The inventors of the invention get the following knowledge about a mechanism of porosity and complete the present invention. That is to say, in order to clarify the mechanism of porosity, the inventors of the present invention observe dynamic behavior of a keyhole at the time of laser welding by means of high-speed x-ray transmission imaging system. As a result, even when welding is carried out with an laser output being constant, the keyhole greatly oscillates randomly to depthwise and radial directions, and weld metal is blown out of the keyhole spontaneously and intermittently at random frequencies. The occurrence of the porosity greatly relates to the oscillation of the keyhole, and when the keyhole greatly oscillates to the depthwise direction, a tip of the keyhole is separated due to capillary instability, so that bubbles are generated in the weld metal. Most of the bubbles generated here remain until the weld metal solidifies, and thus the porosity is formed. The phenomenon that the keyhole greatly oscillates to the depthwise direction at the time of welding is induced by the oscillation of the keyhole to the radial direction. That is to say, as the oscillation of the keyhole to the radial direction becomes larger, the porosity occurs more easily. As a result, when a movement of the keyhole to the radial direction can be detected, an appropriate condition that prevents the oscillation can be easily found, and a condition that effectively prevents the formation of the porosity can be easily optimized.

A laser welding method provided by the present invention of varying a waveform and a frequency of a laser output in a controlled manner so as to prevent occurrence of weld defects is characterized in that a time change in light emission strength of plasma or plume generated in a laser welded portion is detected, and a laser output variation condition is set so that the time change in the light emission strength responds to a variation in the laser output.

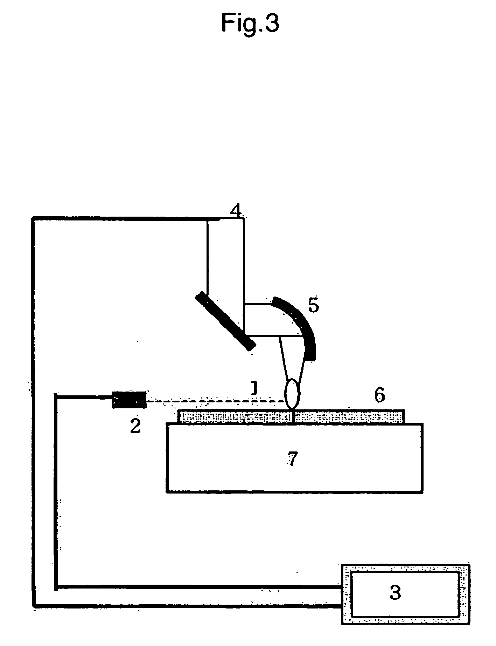

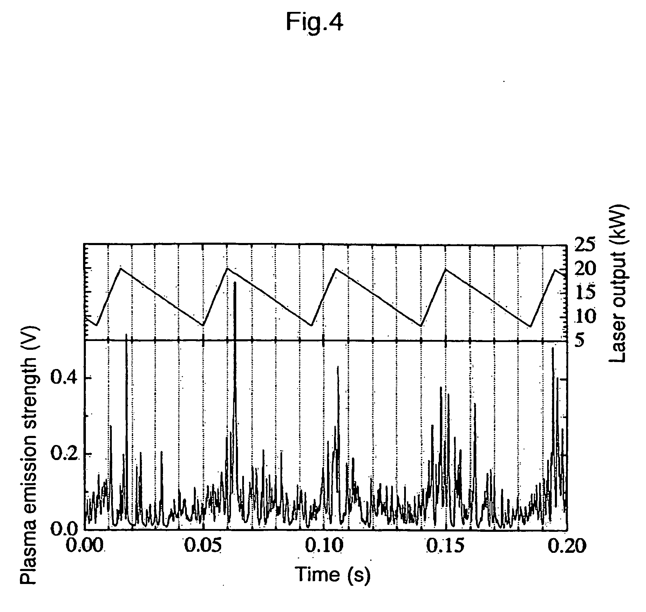

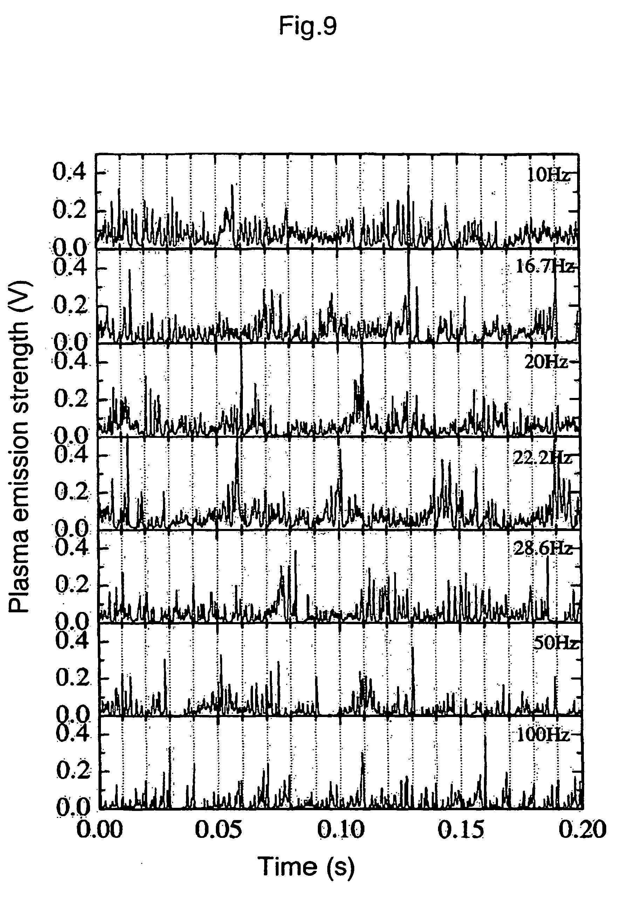

Fig. 3 is a diagram illustrating one example of a method of setting the laser output variation condition according to the present invention. In the case where more concrete example is explained, plasma or plume (1) is formed in a position to which a laser (4) is emitted due to an interaction between the laser (4) and a material to be welded (6) during laser welding. Emission of the plasma or the plume (1) is detected by a sensor composed of a photodiode (2) or the like provided near a welded portion, and this light emission is synchronized with a change in the laser (4) output so as to be recorded in a recording device (3). As a result, for example, as shown in Fig. 9, when a frequency of the variation in the laser (4) output is changed to 10 Hz, 16.7 Hz, 20 Hz, ⋯, the time change in the light emission strength of the plasma or the plume (1) provide various forms. This is examined in detail. When the variation in the laser (4) output is an optimum frequency, as shown in Fig. 4, it is found that the time change in the light emission strength of the plasma or the plume (1), is in good response to the variation in the laser (4) output. It is found that at this time, the variation in the keyhole to the radial direction is small so that the stable keyhole is maintained and the occurrence of the weld defects is prevented most effectively. That is to say, this frequency may be an optimum laser output variation condition. On the contrary, when the frequency of the variation in the laser (4) output is deviated from the optimum value, the variation in the keyhole to the radial direction becomes larger accordingly, and the light emission strength is disordered in response to the variation in the keyhole, so that the variation in the laser (4) output hardly matches with the time change in the light emission strength of the plasma or the plume (1).

When the laser (4) output variation condition is set so that the time change in the light emission strength of the plasma or the plume (1) is in response to the variation in the laser (4) output, the occurrence of the weld defects can be easily prevented during laser (4) welding. As to a determination of the response of the time change in the light emission strength to the variation in the laser (4) output, it is important that the time change in the light emission strength has periodicity which can be regarded to be approximately the same as the variation in the laser output, and further it is required that maximum peak time in each period of the light emission strength matches with or approximately matches with the time of a peak output of the laser. Furthermore, it is preferable that the light emission strength obtains a low value at each period at the time of a laser base output.

In order to simplify and ensure these determinations, therefore, in the laser welding method which is provided by the present invention, data about the time change in the light emission strength of the plasma or the plume (1) obtained in the above manner are analyzed with frequency, and the level of a frequency component which is the same or close to the variation frequency of the laser output is obtained. The laser output variation condition is set so that the level becomes maximum.

In the case where the frequency of the variation in the laser (4) output changes so that the welding is carried out, a peak of the amplitude in a plasma signal is observed in the frequency component which matches with the frequency of the variation under any conditions.

The peak of the amplitude in the frequency component which matches with the variation frequency is the largest when the frequency of the output variation is the optimum condition, and the peak becomes small when the frequency of the output variation is deviated from the optimum condition. This shows that the response between the variation in the plasma signal and the output variation is high or low.

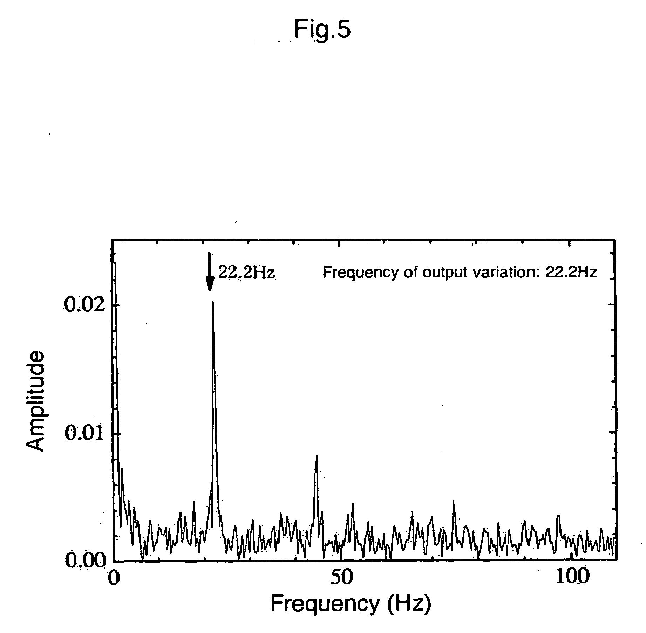

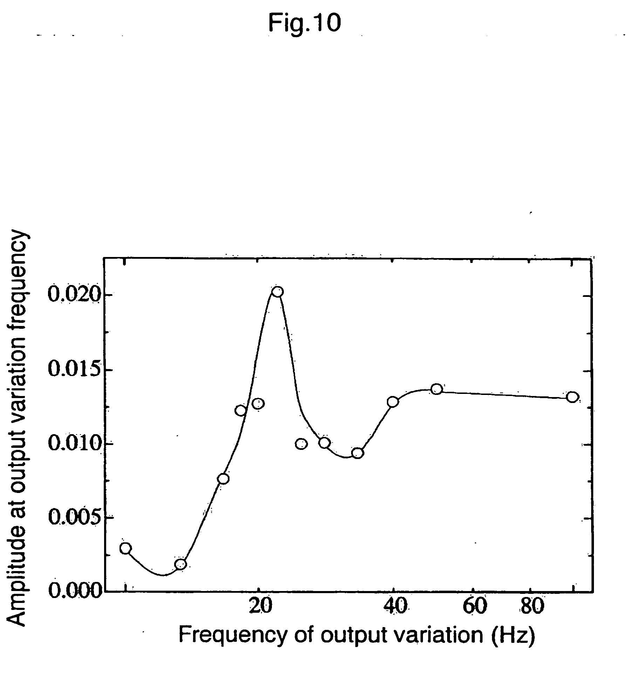

For example, in the frequency analysis of the plasma signal obtained under the optimum laser (4) output variation condition shown in Fig. 4, the peak at which the amplitude is large is observed in the frequency component which matches with the frequency (22.2 Hz) of the variation in the laser (4) output as shown in Fig. 5. When the output is varied at another variation frequency, for example 10 Hz, the peak is found in a position of 10 Hz, but its height is smaller than the case of the optimum frequency. Fig. 10 illustrates a result of obtaining the amplitude (peak value) in the frequency component which matches with the variation frequency under the respective output variation conditions. When, therefore, the variation frequency of the laser (4) output is set so that the amplitude becomes maximum at the frequency component which is the same or near the variation frequency of the laser (4) output, the maximum laser (4) output variation condition can be realized more easily and clearly.

In the present invention, the frequency analyzing method is not particularly limited, and thus any analyzing methods which are used widely and generally can be used. For example specifically, the fast Fourier transforming method or the like can be used.

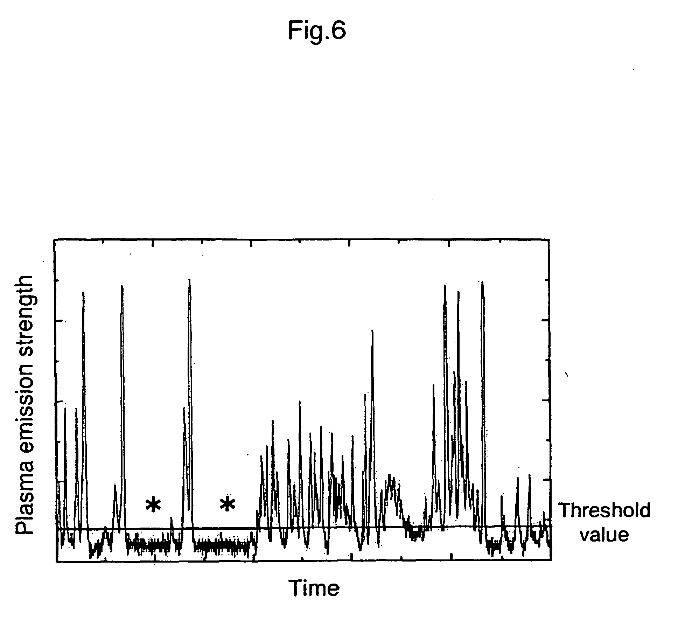

Further, in the laser welding method which is provided by the present invention, an arbitrary threshold value is set to the time change in the light emission strength of the plasma or the plume (1) obtained in the above manner, and the laser (4) output variation condition is set so that the sum of time at which the light emission strength becomes the threshold value or less becomes minimum. This is because in the case where the keyhole varies greatly to the radial direction during the laser (4) welding, as shown by * in Fig. 6, a phenomenon that the plasma (1) emission signal breaks off for short time is seen. The laser (4) output variation condition can be, therefore, set so that the break-off period of the plasma (1) emission signal, namely, the variation in the keyhole to the radial direction becomes minimum. Detection of the state in which the signal breaks off for short time can be made more simply by setting an arbitrary threshold value to the time change in the light emission strength and detecting the time at which the light emission strength becomes the threshold value or less. The threshold value of the light emission strength can be set arbitrarily according to a welding state or by a detecting unit for the light emission strength, but generally whether the state in which the break-off of the light emission for a while can be determined is included is used as guide of the setting of the threshold value.

Furthermore, the time at which the light emission is disrupted can be set arbitrarily, and in the present invention, the laser output variation condition can be set so that the sum of the time at which the light emission strength is the threshold value or less for longer time than a predetermined time becomes minimum. The predetermined time varies according to various conditions in the detection of the light emission signal, but about 2 ms can be shown as a rough guide. According to the present invention, the laser output variation condition can be set more simply without accurately detecting the disruption of the light emission. As a result, the variation of the keyhole to the radial direction is suppressed, and the stable keyhole is maintained, thereby realizing the condition that effectively prevents the formation of the porosity. Since this method has the similar steps as those of a laser welding method which is already proposed by the inventors of the present invention (Japanese Patent Application No. 2002-257195), the optimum waveform can be controlled and simultaneously the frequency can be set easily. Further, two or more of the above methods are combined, so that the optimum laser output variation condition can be set more accurately.

The method according to the present invention can obtain the optimum laser output variation condition for a very short time on the moment at the time of the laser welding. This method can be used also as feedback control.

Examples are described with reference to the accompanying drawings, and the present invention is explained below more specifically.

Examples

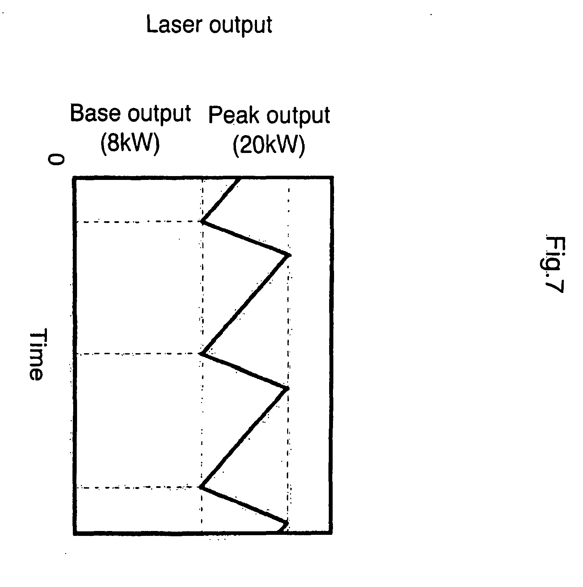

<a> Steel SM490A for general weld structure was used so that partial penetration welding was carried out on a bead-on-plate. At the time of welding, in order to prevent occurrence of the weld defects, as shown in Fig. 7, a laser output was varied by a triangular wave with peak output of 20 kW and base output of 8 kW. Rise time at which the base output varies into the peak output was 10 ms which is constant, and the frequency was changed within the range of 10 Hz to 98 Hz. The device having the constitution shown in Fig. 3 was used, and the light emission strength of the plasma at the time of welding was measured by Si photodiode 2 (Si-Pd) with a sensitivity wavelength range of 190 to 1100 $\mu$m at a sampling frequency of 50 kHz. Si-PD was installed on a horizontal extension of the same level as an object to be welded (6). A laser (4) beam was converged on the surface of the object to be welded (6) by a parabolic mirror (5) with a focal distance of 500 mm. A test piece with width of 20 mm, height of 30 mm and length of 250 mm was used, X-ray transmission test was conducted in the widthwise direction after welding, and a percentage (%) of a weld defect total area with respect to a molten cross section was used as a ratio of defect occurrence so that a state of the weld defects was quantified.

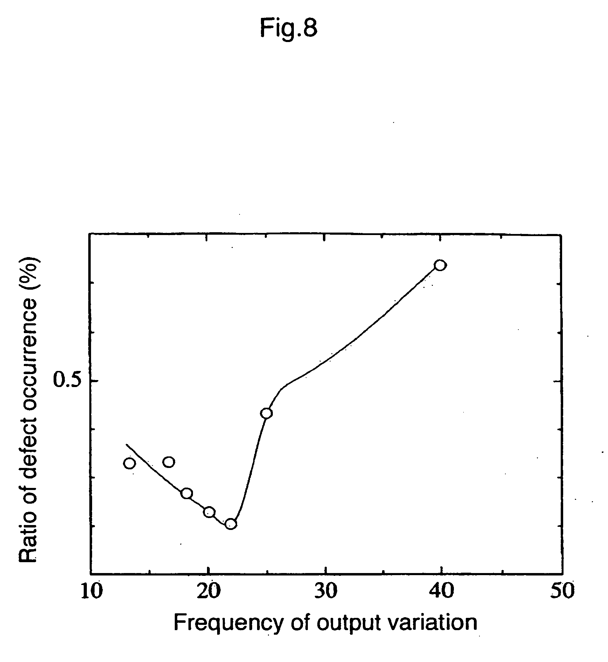

Fig. 8 is a diagram illustrating the rate of occurrence of the weld defects at the respective output variation frequencies. As is clear from the drawing, the weld defects could be prevented most effectively at the output variation frequency of 22.2 Hz. That is to say, 22.2 Hz can be the optimum output variation frequency.

<b> Fig. 9 is a diagram illustrating an example where the plasma emission strength is measured at the time of welding at the respective output variation frequencies. At the optimum variation frequency (22.2 Hz), the plasma emission strength varies in good response to the variation of the laser output, but as the variation frequency deviates from the optimum value, the change in the plasma emission strength becomes more random. The frequency of plasma emission signal was, therefore, analyzed at the respective variation frequencies, the amplitude in the respective variation frequency components is calculated, and the results are shown in Fig. 10. It was found that the amplitude obtained an incomparably high value at the optimum variation frequency (22.2 Hz). As a result, the plasma emission strength is detected, the amplitude at the laser output variation frequency is obtained based on the result of frequency analysis, and the amplitude is set to be maximum so that the optimum output variation condition can be determined easily.

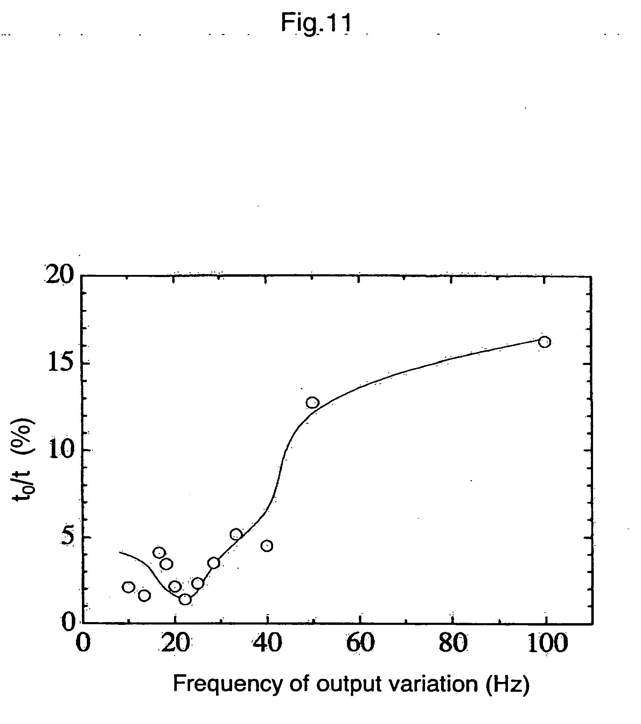

<c> Meanwhile, a threshold value of 0.02 V is set to the signal of the plasma emission strength shown in Fig. 9, the sum t of time at which this state continues for 2 ms or more is obtained, and the percentage of the plasma emission strength with respect to measuring time $t_0$ is shown in Fig. 11. The percentage obtains the minimum value at the optimum variation frequency of 22.2 Hz, and thus the optimum frequency can be determined by this method utilizing the threshold value.

Industrial Applicability

As explained above in detail, according to the present invention, in the laser welding method of suitably varying a waveform and a frequency of a laser output so as to prevent the occurrence of the weld defects, a new laser welding method that can optimize the laser output variation condition more simply and securely is provided. As a result, for example, thick materials can be welded easily with high quality, and thus this method is expected to contribute to practical application of laser welding of thick materials.

**Claims**

1. A laser welding method, which comprises varying a waveform and a frequency of a laser output In a controlled manner so as to prevent occurrence of weld defects and detecting a time change in light emission strength of plasma or plume generated from a laser welded portion **characterised by** analyzing the frequency characteristics of the light emission to obtain an amplitude of a frequency component which is the same or near a variation frequency of the laser output, and setting a laser output variation condition so that the amplitude of the frequency component becomes maximum.

2. The laser welding method according to claim 1, which comprises in the step of detecting the time change in the light emission strength of the plasma or plume generated from the laser welded portion, further setting an arbitrary threshold value to the time change in the light emission strength of the plasma or plume, and setting the laser output variation condition so that a sum of time at which the light emission strength becomes the threshold value or less becomes minimum.

3. The laser welding method according to claim 2, which comprises setting the laser output variation condition so that the sum of the time at which the light emission strength becomes the threshold value or less for longer time than a predetermined time becomes minimum.

**Patentansprüche**

1. Ein Laserschweißverfahren, umfassend das Variieren einer Wellenform und einer Frequenz eines Laseroutputs in kontrollierter Weise, um das Auftreten von Schweißfehlern zu verhindern, und das Erfassen einer Zeitänderung der Lichtemissionskraft von Plasma oder Fahne, das/die von einem lasergeschweißten Teil erzeugt wird, **dadurch gekennzeichnet, dass** die Frequenzeigenschaften der Lichtemission analysiert werden, um eine Amplitude einer Frequenzkomponente zu erhalten, die einer Variationsfrequenz des Laseroutputs entspricht oder nahe an dieser liegt, und eine Laseroutputvariationsbedingung eingestellt wird, so dass die Amplitude der Frequenzkomponente maximal wird.

2. Das Laserschweißverfahren gemäß Anspruch 1, dessen Erfassungsschritt das Erfassen der Zeitänderung der Lichtemissionskraft des Plasmas oder der Fahne, das/die von dem lasergeschweißten Teil erzeugt wird, ferner das Einstellen eines frei wählbaren Schwellenwerts für die Zeitänderung der Lichtemissionskraft des Plasmas oder der Fahne sowie das Einstellen der Laseroutputvariationsbedingung umfasst, so dass eine Summe der Zeit, in der die Lichtemissionskraft den Schwellenwert erreicht oder unterschreitet, minimal wird.

3. Das Laserschweißverfahren gemäß Anspruch 2, welches das Einstellen der Laseroutputvariationsbedingung umfasst, so dass die Zeitsumme, in der die Lichtemissionskraft länger als eine vorbestimmte Zeit den Schwellenwert erreicht oder unterschreitet, minimal wird.

**Revendications**

1. Procédé de soudage au laser, qui consiste à faire varier une forme d'onde et une fréquence d'une sortie laser d'une manière contrôlée, de façon à éviter l'apparition de défauts de soudure, et à détecter une variation dans le temps de l'intensité d'émission de lumière du plasma ou du panache généré par une partie soudée au laser, **caractérisé par** l'analyse des caractéristiques fréquentielles de l'émission de lumière pour obtenir une amplitude d'une composante fréquentielle qui est identique ou proche d'une fréquence de variation de la sortie laser, et l'établissement d'une condition de variation de sortie laser de sorte que l'amplitude de la composante fréquentielle devienne maximum.

2. Procédé de soudage au laser selon la revendication 1, qui consiste, à l'étape de détection, à détecter la variation dans le temps de l'intensité d'émission de lumière du plasma ou du panache généré par la partie soudée au laser, à fixer en outre une valeur de seuil arbitraire pour la variation dans le temps de l'intensité d'émission de lumière du plasma ou du panache, et établir la condition de variation de la sortie laser de sorte que le temps total pour que l'intensité d'émission de lumière atteigne la valeur de seuil ou moins devienne minimum.

3. Procédé de soudage au laser selon la revendication 2, qui consiste à établir la condition de variation de la sortie laser de sorte que le temps total pour que l'intensité d'émission de lumière atteigne la valeur de seuil ou moins pendant un temps plus long qu'un temps prédéterminé devienne minimum.

# Fig.1

# Fig.2

# Fig.3

## Fig.4

Fig.5

# Fig.6

Fig.7

# Fig.8

Ratio of defect occurrence (%) vs. Frequency of output variation

## Fig.9

# Fig.10

# Fig.11

**REFERENCES CITED IN THE DESCRIPTION**

**Patent documents cited in the description**

- US 20040026381 A1
- JP 2002224867 A
- JP 2002273586 A
- US 5155329 A
- JP 10006051 A
- JP 2002257195 A